# EUROPEAN PATENT APPLICATION

(11) **EP 3 808 502 A1**
(43) Date of publication of application: **21.04.2021**
(21) Application number: 20200227.5
(22) Date of filing: 06.10.2020
(51) Int. Cl.: B23Q 9/00, B23Q 11/00

(54) **IMPROVED MACHINE TOOL**

(30) Priority: 16.10.2019 IT 201900019010
(71) Applicant: SPRINGA S.R.L., 20158 Milano (IT)
(72) Inventor: FRANGI, Lorenzo, I-20825 Barlassina (Monza Brianza) (IT); CEVOLI, Davide, I-40013 Castel Maggiore (Bologna) (IT); TRIFONI, Alessandro, I-40139 Bologna (IT)
(74) Representative: Lunati & Mazzoni S.r.L.

(57) **Abstract**

An improved machine (1) tool is provided that is designed to remove material from an object (10) that defines a machining surface (10a), wherein the machine (1) comprises a removal device (2) for removing material from the object (10), consisting of a cutting and/or drilling tool; handling means (3) designed to be placed in direct contact with the machining surface (10a) and to handle the machine (1) tool and, therefore, the removal device (2), with respect to the object (10) while the removal device (2) removes material from the object (10), extraction means (8) including at least one extraction duct (80) defining an inlet (80a) section positioned close to the machining surface (10a) near the removal device (2) when the machine (1) tool is in use and configured so that it can be operated at least while the removal device (2) removes material from the object (10).

## Description

This invention relates to an improved machine tool of the type specified in the preamble of the first claim.

In particular, the device that this invention relates to is a machine tool the movement of which during machining is directed by a computer that controls the movements thereof and functions according to a well defined work program.

As is well known, machine tools differ according to the type of machining or tool in lathes, drills, sanding machines, milling machines, and usually comprise a workholding table to which the object to be machined is attached and a spindle to which the tool for performing the machining is connected.

The operation of these machines involves the operator's placing the object on the workholding table, attaching a tool to the spindle, performing the relative positioning between the spindle and tool, starting the spindle, and, then, moving the object to be machined and/or the spindle along a straight guide.

The prior art has a few major drawbacks.

A first drawback is that, in order to execute non-straight shapes or profiles, the handling of the tool or of the piece to be machined is performed manually by the operator, who must, therefore, have a lot of experience and manual skill.

Another drawback is the great danger of machining and, therefore, the fact that the operator can be seriously injured.

This drawback is further increased by the fact that the safety guard is often removed to improve the view of the cut or blade.

An additional drawback is that the operator, in order to carry out different machining operations, is forced both to purchase several machines, increasing production costs, and to move the object between different machines, increasing the processing times.

To resolve the above-mentioned drawbacks, numerical control machines are increasingly used to identify a fixed station on which to perform different machining operations without moving the object to be machined.

Numerical control machines have a protective shell containing the various components and defining: a machining chamber; an interface external to the shell through which the machining to be carried out is defined; a workpiece loading system to introduce and extract the object to be machined from the machining chamber; several spindles on which the tools for machining are mounted; and tool change systems.

Finally, the spindles are equipped with a handling system that, by translating or rotating in relation to the object, enables a selected machining operation to be performed.

These machines, while representing an improvement compared to the conventional machine tools described above, have some significant drawbacks.

A first significant drawback is the limited size of an object that can be machined using such machines: since the object has to be introduced into the machining chamber, it cannot be very large.

Another drawback is that numerical control machines are very complex to construct and, therefore, are very expensive to purchase and maintain.

Another drawback is the high energy consumption of these machines that, together with the above-mentioned high purchase and maintenance costs, makes the workpieces produced thus particularly expensive.

An additional drawback is that numerical control machines require advanced operator knowledge of the machine, the programming language, and, therefore, are complex to program and use.

The machine tool described in the patent application WO-A-2016051342 describes a device that can partially overcome the above-mentioned drawbacks.

In particular, the device is characterised in that it is smaller in size and operates above the piece being machined, without limits from the point of view of the dimensions of the piece, and without creating visual obstacles with reference to the machining track.

This device therefore makes it possible to follow a pre-set machining path, or to set the machining parameters in real time so as to guide the device along the surface of the particular object to be engraved.

However, the above-mentioned technique still comprises at least one major drawback.

In particular, since the machine tool is designed to machine the surface of an object while it is moving on the same machining surface, it may be subject to jolts and skids resulting from roughness on the machined surface due to both grooves and machining waste. The latter, in particular, settle on the machining surface hindering the running of the machine tool along the predetermined path with potentially serious consequences for the precision and execution quality of the object's machining.

In this context, the technical task underlying this invention is to devise an improved machine tool capable of substantially overcoming at least some of the above-mentioned drawbacks.

Within said technical task, one important purpose of the invention is to obtain an improved machine tool that makes it possible to maintain high precision and quality of machining during the whole running path of the machine tool.

Another important purpose of the invention is to create a machine tool that is able to reduce or eliminate deposits, e.g. of scraps, on the machining surface of the object in such a way as to ensure maximum efficiency of the machine tool handling means.

The technical task and specified purposes are achieved with an improved machine tool as claimed in the appended claim 1.

Preferred technical solutions are set forth in the dependent claims.

The features and advantages of the invention will be apparent from the detailed description of preferred embodiments of the invention, with reference to the accompanying drawings, in which:
**Fig. 1** shows a cross-section view of an improved machine tool according to the invention;

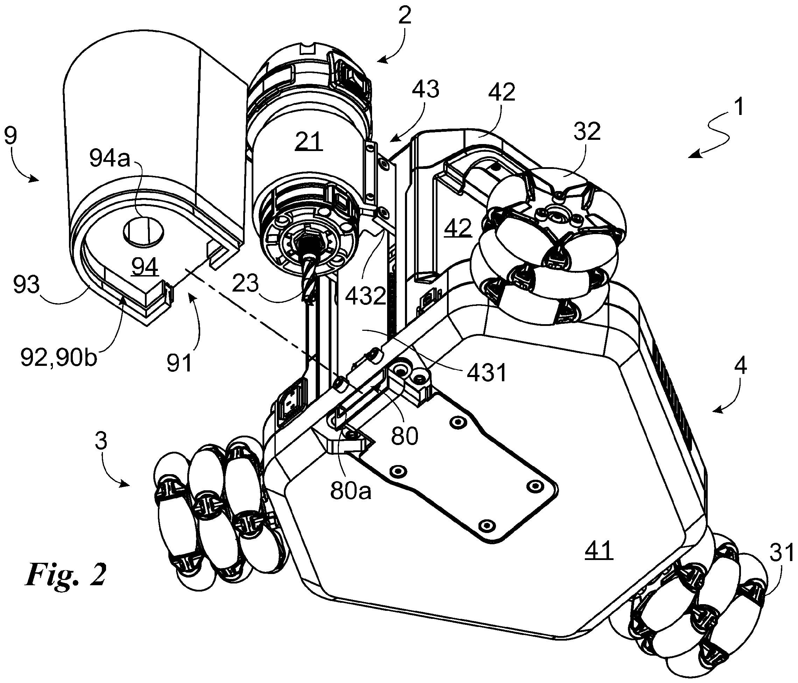

**Fig. 2** illustrates a view from below of an improved machine tool according to the invention where the method for attaching the cover and the casing is highlighted;

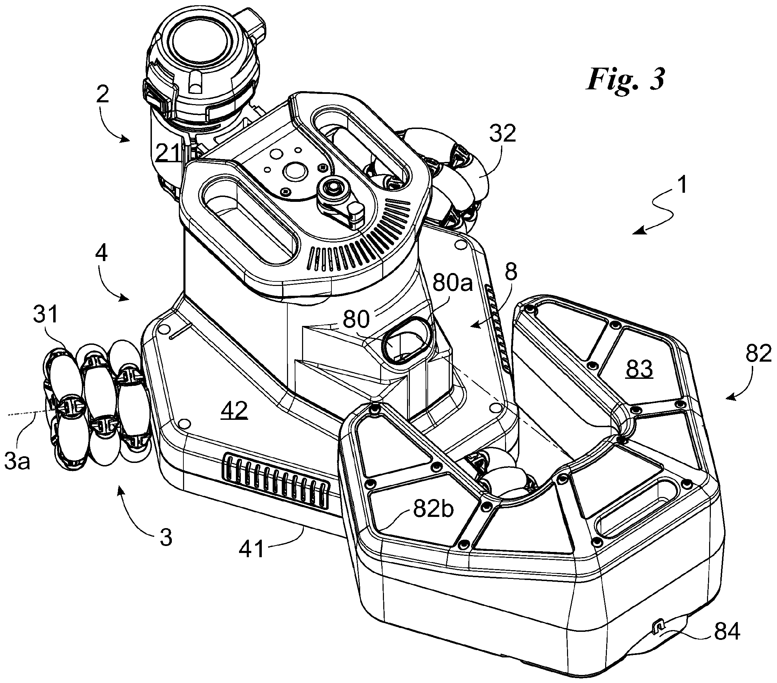

**Fig. 3** is a view from above of an improved machine tool according to the invention wherein the method for attaching the collection housing and the casing is highlighted;

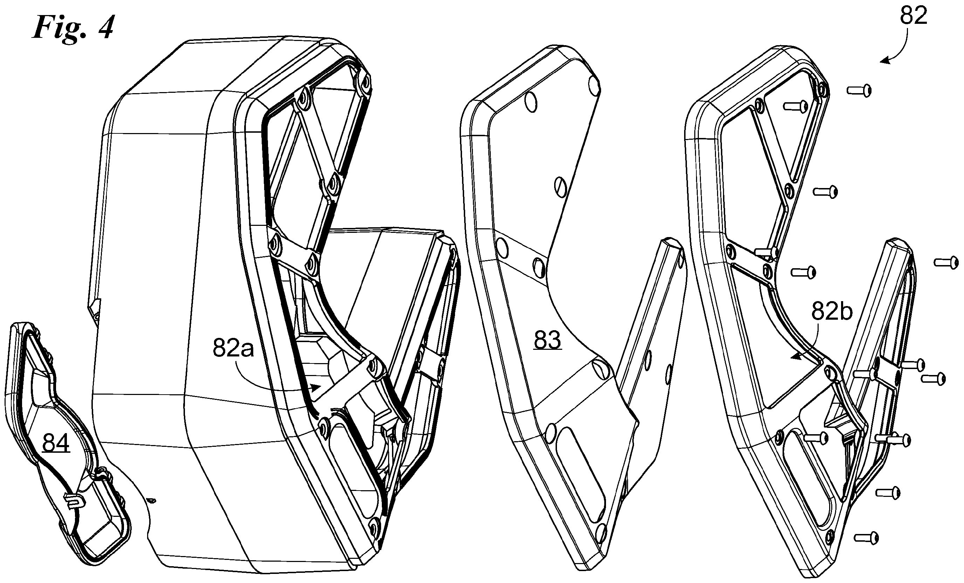

**Fig. 4** depicts an exploded view of the collection housing of an improved machine tool according to the invention;

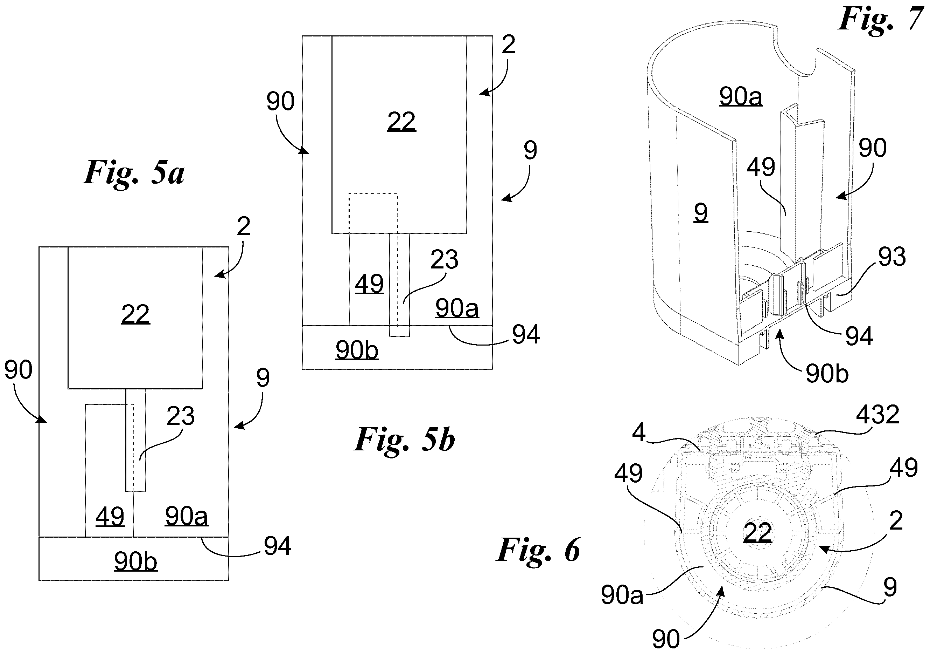

**Fig. 5a** shows a diagram of the removal device and the cover of an improved machine tool according to the invention in a non-operational configuration wherein the safety means and the spindle do not interfere;
**Fig. 5b** illustrates a diagram of the removal device and the cover of an improved machine tool according to the invention in an intermediate configuration wherein the safety means and the spindle interfere, and the tool is not yet adhering to the machining surface;
**Fig. 6** is a cross-section view from above of the removal device and the cover of an improved machine tool according to the invention wherein the profile of the safety means is visible; and
**Fig. 7** represents a perspective view of the cover of an improved machine tool according to the invention wherein one of the safety means is visible.

In this document, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, if associated with a value, such terms preferably indicate a divergence of no more than 10% from the value itself.

Furthermore, when terms such as "first", "second", "upper", "lower", "main" and "secondary" are used, they do not necessarily identify an order, relationship priority or relative position, but they can simply be used to distinguish different components more clearly from one another.

Unless otherwise stated, the measurements and data reported in this text shall be considered as performed in International Standard Atmosphere ICAO (ISO 2533:1975).

With reference to the above-mentioned figures, the reference number **1** globally denotes the improved machine tool according to the invention.

It is designed to be used to remove material from a machining surface **10a,** preferably basically flat, of an object **10** in order to perform removal operations to create channels, holes, grooves, and/or to cut the object itself. In particular, the object 10 is a slab, preferably made of wood, and the removal operations are cuts in the slab. The object 10 or piece to be machined has, thus, dimensions and surfaces generally smaller than 100 m².

The object 10 can be made of wood, paper, cardboard, fabric, or metal.

The machine tool 1 comprises at least one removal device **2** for removing material from the object 10; handling means **3** designed to be placed in direct contact with the surface 10a and to handle the removal device 2 and the machine tool 1 in relation to the object 10; a casing **4** to which the removal device 2 and the handling means 3 are connected; and a power supply (a battery and/or cables for connecting to an external network) designed to power the components of the machine tool 1.

The removal device 2 is, therefore, a cutting and/or drilling tool designed to remove material via fusion, evaporation, or, preferably, by means of removing shavings. It can, therefore, be a tool that rotates, in alternating movement, or a laser, a waterjet cutter, or something else. It is preferably a small tool, i.e. a tool that removes material in a surface area of less than dm², preferably less than cm².

The object 10 is, thus, directly in contact with and supports the handling means 3 during the machining operation and the exchange of forces during machining occurs directly between the object 10 and handling means 3.

It may include a stator part **21;** a spindle **22,** preferably an electrospindle, defining a working axis **22a;** and a tool **23** designed to attach to the spindle 22 so as to rotate around the working axis 22a removing the material.

The tool 23 may be a drill bit and, therefore, the removal device 2 may be a drill. Alternatively, the tool 23 may be a milling cutter and, therefore, the removal device 2 may be a milling machine.

The handling means 3 comprise drive wheels each defining a main rotation axis **3a** and the machine tool 1 has a control unit **5** designed to control at least the removal device 2 and, therefore, the removal operation, and the drive wheel and, therefore, the movement of the machine tool 1 along a removal path **1a** along which the material is removed.

It should be noted that, if equipped with a control unit, the machine tool 1 consists of a numerical control machine tool.

In addition, the control unit 5 does not require any operators to be on board the machine tool 1, which is too small, since it machines an object 10, to accommodate an operator.

The handling means 3 preferably include a plurality of drive wheels and, to be precise, three drive wheels that have main rotation axes 3a almost equally angularly spaced apart by approximately 120°.

Each drive wheel includes: a base body **31,** preferably almost cylindrical, with an extension axis almost coinciding with the rotation axis 3a and designed to rotate around the same axis 3a; rolling elements **32** hinged idly at the lateral surface of the base body 31 so that they are placed between the body 31 and the surface 10a and, therefore, are directly in contact with the same surface 10a; a motor **33,** specifically an electric one, designed to control the rotation of the base body 31 around the axis 3a; and, in some cases, an encoder designed to monitor the motor 33.

The rolling elements 32 hinged to the base body 31 are placed along at least one circumference almost concentric to the main rotation axis 3a and with idle rotation axes lying on a planes that is basically transverse and, in particular, almost perpendicular to the main rotation axis 3a. The elements 32 are preferably placed on a plurality of circumferences (specifically, three) of equal radius and, between adjacent circumferences, angularly offset from each other so that the contact between rolling elements 32 and machining surfaces 10a is always correct.

The rolling elements 32 are rollers and, to be precise, conical or barrel-shaped ones. The drive wheels 3 are preferably so-called "omni wheels", known in themselves.

The casing 4 is designed to support the various components of the machine tool 1. It comprises: a base plate **41** designed to be arranged near and parallel to the surface 10a and to which the control unit 5 and handling means 3 are connected; a housing **42** connected to the base plate 41 defining a housing volume for at least the unit 5; and an attachment **43** designed to attach the removal device 2 to the casing 4 arranging the working axis 22a conveniently almost perpendicular to the machining surface 10a when the machine tool 1 is operating. In some cases, the casing 4 may include handles, protruding from the base plate 41 and/or from the housing 42 on the opposite side to the surface and designed to allow an operator to manually manoeuvre it.

The base plate 41 may have dimensions basically less than 0.5 m and, to be precise, less than 0.3 m, while the housing 42 may have a height, calculated perpendicularly to the base plate 41, basically less than 0.3 m and, to be precise, less than 0.2 m. The attachment 43 may comprise: a vertical plate **431** designed to be arranged almost perpendicularly to the surface 10a; at least one hook **432** designed to attach the stator part 21 to the vertical plate 431. In addition, it could also comprise: an additional horizontal plate designed to be arranged almost parallel to the surface 10a and on which the stator part 21 rests and having a through hole at least equal to the spindle 22 cross section so that it and the tool 24 protrude from the horizontal plate 433 facing the object 10.

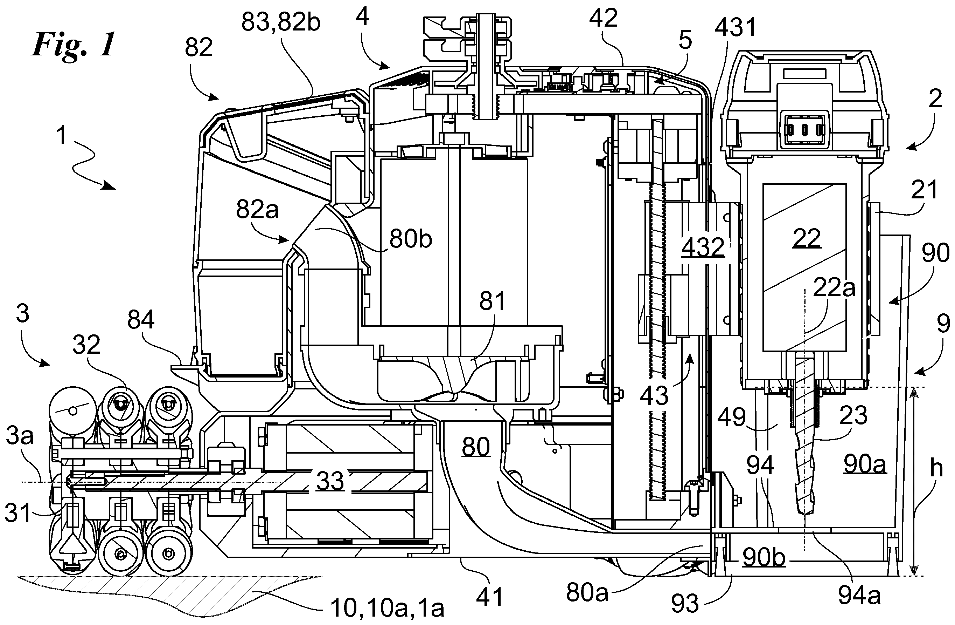

The hook 432 can be of various kinds. For example, it could be a vice and include two counter elements, for example basically in a C-shape, designed to be placed on the opposite side to the stator part 21 and a clamp, for example a bolt, with which to clamp the counter elements to the stator part 21. Or it could include other hooking methods, as shown in Fig. 1, which are, however, known to the person skilled in the art and to which this invention does not specifically relate.

In some cases, the machine tool 1 may include handlers between the attachment 43 and the rest of the casing 4. The handlers are designed to move the attachment 43 and the removal device 2 in relation to the rest of the casing 4 and, therefore, to the machining surface 10a.

The handlers, not illustrated in the figures, may include a vertical handler designed to vary the distance of the removal device 2 from the surface 10a via a translation that is, preferably, basically parallel to the working axis 22a; and/or a rotational handler designed to rotate the removal device 2 around an axis that is basically parallel to the machining surface 10a and almost perpendicular to the working axis 22a, by varying the inclination between the working axis 22a and the surface 10a. The control unit 5 is designed to control, independently of each other, the drive wheels of the handling means 3 in line with the removal path 1a.

It is, in addition, designed to define the removal operation by controlling the handlers, and the removal device 2 and, in particular, the spindle 22 as a function of the removal operation parameters.

The control unit 5 includes a control board connected to the removal device 2 and to the drive wheels and provided with a memory and interface means, such as a USB port, Wi-Fi communication devices, or Bluetooth™, through which the operator can insert and store on said memory the removal operation parameters and, in some cases, the path 1a.

It should be noted that the memory includes a handling database associating a speed and a rotation direction for each drive wheel, around its main rotation axis 3a, to any kind of forward travel (straight, arched, elliptical, etc.).

The control unit 5 is preferably composed of a microcomputer, conveniently an Arduino® or Raspberry® microcomputer.

In some cases, the machine tool 1 may comprise markers designed to be placed on the surface 10a and to define the removal path 1a and detectors designed to detect the presence of the markers, which can be moved by handling means 3 and connected to the unit 5 that is, thus, able to move the machine tool 1 as a function of the signal of the markers.

The markers, if present, are preferably of the optical type and may comprise one or more coloured strips, preferably two, placed on opposite sides of the removal path, to be applied to the machining surface 10a almost parallel to the path.

The detectors may be optical and, therefore, comprise one or more cameras, preferably two and placed opposite the removal device 2, designed to detect the markers placed on the surface 10a.

Alternatively to the markers and detectors, the removal path 1a can be defined through a programmer external to the machine tool 1 and, thus, can be transferred to the unit 5 through the interface means of the same unit that controls, thus, the forward movement as a function of the only path thus stored.

As an additional alternative, the machine tool 1 may require that the removal path 1a be defined through a programmer external to the machine tool 1, transferred through the interface means to the control unit 5 that commands the forward direction as a function of the path implemented on it, and uses the markers and the detectors to verify the correct forward movement.

The machine tool 1 also advantageously comprises extraction means **8.**

The extraction means 8 are preferably designed to extract air and any machining waste from the machining surface 10a. Preferably, therefore, they are configured to be operated at least while the removal device 2 removes material from the object 10.

The extraction means 8 preferably include at least one extraction duct **80.** The extraction duct 80 is basically a channel designed to convey at least air and also, potentially, other solid particles through itself.

Therefore, the duct 80 defines an inlet section **80a.**

The inlet section 80a is preferably the section designed to draw air or something else from the outside and introduce it inside the duct 80.

The inlet section 80a is preferably arranged near the machining surface 10a at the removal device 2, or also near the latter, when the machine tool 1 is in use. Preferably, therefore, the inlet section 80a is basically arranged close to both the removal device 2 and the machining surface 10a when the machine tool 1 is in use. The duct 80 includes, in addition, an expulsion section **80b.**

The expulsion section 80b is preferably the duct section 80 designed to enable the release from the duct 80 of what has entered the inlet section 80a.

The duct 80 can, therefore, be an element external to the casing 4 and removably attached to it. In addition, it can also be extractible, and able to be moved so as to bring the inlet section 80a near the machining surface 10a when the machine tool 1 is in use.

Preferably, however, the duct 80 is formed inside the casing 4 itself.

The inlet section 80a, therefore, and the expulsion section 80b are apertures or slots made in the casing 4 and connected by a channel made in the casing 4 that defines the duct 80.

Or, the casing 4 could just define the sections 80a, 80b and include a tube designed to connect them.

In any case, the extraction means 8 preferably also include an extraction device **81.** The extraction device 81 is preferably designed to exert a suction action so as to convey air and any waste from the inlet section 80a towards the expulsion section 80b through the duct 80.

The extraction device 81 can be arranged both downstream of the duct 80, or near the inlet section 80a, which is upstream of the duct 80, or near the expulsion section 80b, or, also, outside the machine 1.

However, in the preferred embodiment, the extraction device 81 is arranged inside the duct 80, the inlet section 80a, and the expulsion section 80b.

In order to exert the suction action, at least in this last preferred embodiment, the extraction device 81 is preferably operationally connected to the control unit 5. Therefore, the latter controls the extraction device 81 and can control the activation and deactivation of this.

The extraction device 81, in particular, can be any contraption able to depress the area of the inlet section 80a.

Therefore, for example, it may also include a fan. The latter can also be driven at different speeds, for example established by the control unit 5, including, potentially, depending on the handling speed of the machine 1 via the handling means 3 that determine the flow of air and waste exiting the duct 80.

The extraction means 8 preferably also include a housing **82.**

The housing 82 is preferably closed and basically defines, therefore, a closed container. However, the latter defines at least one first access **82a** and a second access **82b.**

The first access 82a preferably fluidly connects with the duct 80 at the expulsion section 80b. The second access 82b preferably communicates with the outside and is designed to only enable the passage of air through it.

To this end, the housing 82 preferably includes a filter **83.**

The filter 83 is preferably arranged at the second access 82b and is designed to prevent the release of dust from the housing 82. The filter 83 can, therefore, be composed of a membrane or a perforated mesh including smaller or bigger holes sized according to the filtering needs.

The housing 82, therefore, is basically a collector configured to collect inside any machining waste coming from the machining surface 10a and to only expel air outside.

Of course, the housing 82 could be permanently fixed and attached to the casing 4, or removable. Preferably and advantageously, the housing 82 is removably attached to the casing 4 in such a way that it can be hooked or unhooked from the machine 1. Therefore, the fluidic connections described above are to be regarded as releasable and related to the configuration wherein the housing 82 is in use on the machine 1.

In addition, the housing 82 preferably also includes a door **84.**

The door 84 is a bulkhead that can be opened and enables access to the inside of the housing 82 or the housing 82 to be isolated on command. The door 84 is preferably arranged on the bottom of the housing 82. In this way, it enables the housing 82 to be emptied of any solid waste deposited inside of it.

Advantageously, the machine 1 also includes a cover **9.**

The cover 9 is preferably arranged or can be arranged around the removal device 2.

In particular, it is arranged around the removal device 2 so as to create at least one closed chamber **90** with part of the casing 4.

The chamber 90 can, therefore, be wholly delimited by the cover 9, or it can be delimited in part by the cover 9 and in part by the casing 4. The latter configuration is preferable and the cover 9 is a shell portion propped, or able to be propped, on the casing 4 to isolate the closed chamber 90 inside of which the removal device 2 is housed and hidden.

The cover 9 can, therefore, be fixed to the casing 4, or, preferably, it is removably attached to the casing 4 around the removal device 2 in such a way as to conceal the removal device 2 from the outside.

The cover 9 can also be present if the machine 1 does not include extraction means 8.

The cover 9, therefore, irrespective of the presence or lack thereof of the extraction means 8, is preferably attached to the casing 4 in such a way as to be locked or removable according to the configurations adopted by the removal device 2. Preferably, therefore, one of either the casing 4 or the cover 9 includes safety means **49.**

The safety means 49 are configured to lock the cover 9 when the removal device 2 reaches a distance in relation to the surface 10a that is less than a predetermined distance.

The distance between the removal device 2 and the surface 10a is, preferably, evaluated between the spindle 22 and the surface 10a in particular. In fact, the spindle 22 is a fixed portion of the removal device 2, while the tool 23 can be varied. In this respect, the predetermined distance is preferably determined by considering every possible tool 23 to be used with the machine 1 and, therefore, especially considering the tool 23 with the greatest extension.

In fact, as already mentioned, the machine 1 may include handlers that vertically move the removal device 2 in relation to the surface 10a.

The removal device 2 can, therefore, basically define an operating position wherein it is arranged right next to or within the surface 10a and a non-operating position wherein it is at a distance from the surface 10a and is, basically, still. The handlers may also include an intermediate position wherein the removal device 2 is not in contact with the surface 10a, but nor is it in the non-operating position.

This intermediate position may be a waiting position wherein the removal device 2, detached from the surface 10a is stilled before being arranged in the non-operating position.

The predetermined distance can, therefore, be defined by the intermediate position. Or, the handlers may be calibrated in such a way as to slowly distance the removal device 2 from the surface 10a so as to enable the still state to be reached before reaching the non-operating position and, in this case, the predetermined distance may be the same as the non-operating position.

The safety means 49 may, in addition, be of various types.

They may include electro-mechanic actuators configured to lock the cover 9 and controlled by sensor switches that detect the position of the removal device 2. In this case, the safety means 49 are preferably included directly in the casing 4 and operationally connected to the above-mentioned switches.

Or, preferably, the safety means 49 may include interlocking elements protruding from the lateral bulkheads of the cover 9 and extending from below, i.e. close to the ground, up to a height limit **h** in relation to the surface 10a.

The height limit h defines, therefore, the predetermined distance. Basically, in this configuration, the removal device 2 does not interfere with the safety means 49 when the latter are located at a distance, higher than the height limit h, from the surface 10a. On the other hand, when the removal device 2 approaches the surface 10a, it engages the interlocking safety means 49 and does not enable the cover 9 to be removed.

Of course, in the latter configuration, the safety means 49 are preferably included directly in the cover 9.

In addition, the closed chamber 90 preferably defines at least one first opening **91** and a second opening **92.**

The first opening 91 is preferably configured to fluidly connect the inlet 80a section with the closed chamber 90.

The second opening 92 preferably directly faces onto the machining surface 10a when the machine 1 is in use.

Basically, therefore, the second opening 92 is preferably an access arranged on the bottom of the cover 9 and the first opening 91 is an access arranged near the same second opening 92.

In particular, the cover 9 preferably comprises a plurality of bristles **93.**

The bristles 93 are preferably arranged along the edge of the second opening 92 and are designed to come into contact with the machining surface 10a when the machine tool 1 is in use.

In this way, the bristles 93 allow you to brush any residue on the machining surface 10a into the closed chamber 90.

In conclusion, the closed chamber 90 can define a first compartment **90a** and a second compartment **90b.**

These compartments 90a, 90b can be separated from each other by a partition **94.** Therefore, the closed chamber 90 may comprise a partition 94 to separate the compartments 90a, 90b.

The first compartment 90a is preferably configured to house the entire removal device 2 when the removal device 2 is at rest. Therefore, the first compartment is arranged at the top of the cover 9 and the partition 94 divides the closed chamber 90 into two compartments 90a, 90b, one on top of the other.

The second compartment 90b is preferably adjacent to the second opening 92 and also communicating with the first opening 91. Therefore, the second compartment 90b basically defines a collection chamber from which air and any waste is sucked. When the machine 1 is in use, the compartments 90a, 90b are preferably basically isolated from each other.

In this regard, the partition 94 preferably includes a hole **94a.**

The hole 94a is designed to enable the passage of the removal device 2 through itself.

Preferably, therefore, it basically has similar dimensions to the removal device 2 in such a way that, when the removal device 2 is in use, the compartments 90a, 90b are basically isolated from each other.

Of course, the hole 94a is, however, preferably slightly oversized in relation to the removal device 2 in order to prevent the removal device 2 from colliding with the partition 94 at the edges of the hole 94a.

The operation of a machine tool, described above in a structural sense, is as follows. This operation introduces an innovative machining process for removal operations designed to be implemented by the machine tool 1 described above.

The process comprises: a preparation step for the machine tool 1; a positioning step in which the machine tool 1 is placed on said machining surface 10a; and a removal step in which the handling means 3 move the machine tool 1 along the removal path 1a and in which the removal device 2 removes material from the object 10 along the path 1a.

In the preparation step, the removal path 1a is defined and the machining parameters (e.g. tool rotation speed, feed rate) are entered into the control unit 5 and, specifically, into the control card.

The definition of the path 1a can be carried out, for example but not necessarily, by arranging the markers on the machining surface 10a so as to form at least one strip parallel to the path 1a or, preferably, two strips placed on opposite sides of the path 1a and almost parallel to each other and to the path 1a. In addition or alternatively, the path 1a is defined on a programmer external to the machine tool 1 and transferred via the interface means to the memory of the control unit 5.

The preparation step is completed by attaching the removal device 2 to the casing 4. In particular, the operator adjusts the distance of the spindle 22 from the machining surface 10a, thus setting the depth of pass, and, using the hook 432, locks the removal device 2 in the desired position.

The machine tool 1 is then ready for machining.

The positioning step begins in which the machine tool 1 is placed on the surface 10a and, then, the removal step in which the handling means 3 move the machine tool 1 along the removal path 1a while, almost at the same time, the removal device 2 removes material from the object 10 along the path 1a carrying out the machining. At the same time, the extraction means 8 are operated so that any machining waste is sucked onto the machining surface 10a at the second opening 92 of the closed chamber 90.

This suction is also made effective by the presence of bristles 93 that help to remove residual material by freeing the path 1a.

Specifically, during the removal and extraction step, the unit 5, according to the movement database and the detector signal and/or the path 1a stored in the memory, activates/deactivates the drive wheels by varying the forward direction of the machine tool 1 in accordance with the path 1a and controls the extraction device 81 as required.

In particular, from the point of view of handling, for example, if the removal path 1a includes a straight section that is almost parallel to one of the main axes of rotation 3a, the unit 5 commands the wheel to stop with an axis parallel to said direction and a concordant rotation of equal modulus of the remaining wheels; while, if the path includes a curved section, the control unit 5 commands a discordant rotation of equal modulus of two wheels leaving the third stationary.

Once the removal step has been completed, the machining process may end or, alternatively, include an additional removal step in which the handling means 3 move the machine tool 1 at least one additional time along the removal path 1a and the removal device 3 removes, at least one second time, material from the object 10 along the path 1a, thereby increasing the thickness of the material removed and preferably cutting the object 10.

Finally, it should be noted that, during the removal or additional removal step, the handling of the machine tool 1 can be carried out manually by the operator thanks to the handles.

In conclusion, any residues deposited in the housing 82 can be removed from the housing 82 itself, via the door 84, and very quickly.

The machine tool 1 according to the invention achieves some important advantages. In fact, a first significant advantage of the machine tool 1 compared to those known until now is to be identified in the fact that it is able to perform machining on any surface extension. In fact, being positioned on the object 10 and able to move without limitation along the entire machining surface 10a, it is capable of machining basically unlimited surfaces. This is not possible with known machines where the machining travel is limited by the travel of the workholding table and/or spindle. Another advantage is the reduced overall dimensions of the machine tool 1 that, therefore, constitutes an innovative small tool that can be transported and used in any place to make large-sized products.

Another advantage is that, unlike most known machine tools, the use of the machine tool 1 is extremely safe.

In fact, even in the case of manual handling, the arrangement of the tool 23 makes it possible to conceal and make the cutting area difficult to access.

Another advantage is the fact that the machine tool 1, following a stored removal path 1a or the markers 6, is able to perform very precise and accurate machining operations.

Another advantage is that, since it is possible to perform multiple passes along the same identical path 1a, you can also perform cutting operations.

A significant advantage, especially compared to the known numerical control machines, is that the machine tool 1 can also be used by an operator without specific knowledge.

Another advantage is owed to the presence of the handlers that, by translating and rotating the removal device 2 in relation to the machining surface 10a, make it possible to vary, even during the same pass, the material removal depth and the inclination of the slot in relation to the surface 10a.

Last but not least, the machine tool 1 is also advantageous in its simplicity of construction that means that the machine tool 1 is more cost-effective to purchase and maintain.

In conclusion, in view of all the advantages listed, an additional advantage of the improved machine tool is the fact that the extraction means 8 enable efficient cleaning of the path 1a on the machining surface 10a, thanks to the cover 9, preventing any deposits of scraps on the surface itself from causing the handling means 3 to perform undesirable skids and jolts.

As a result, the extraction means 8 significantly increase the quality and speed of the improved machine tool's machining compared to machine tools in the prior art. The invention is susceptible to variations falling within the scope of the inventive concept defined by the claims.

In this context, all details can be replaced by equivalent elements, and the materials, shapes, and dimensions may be any materials, shapes, and dimensions.

## Claims

1. An improved machine (1) tool designed to remove material from an object (10) that defines a machining surface (10a), said machine (1) tool, comprising
- a removal device (2) for removing material from said object (10), consisting of a cutting and/or drilling tool;
- handling means (3) comprising drive wheels designed to be placed in direct contact with said machining surface (10a) and to handle said machine (1) tool and, therefore, said removal device (2), with respect to said object (10) while said removal device (2) removes material from said object (10),
and **characterised in that** it additionally comprises
- extraction means (8) including at least one extraction duct (80) defining an inlet (80a) section positioned close to said machining surface (10a) at said removal device (2) when said machine (1) tool is in use and configured so that it can be operated at least while said removal device (2) removes material from said object (10).

2. The machine (1) according to claim 1, comprising a casing (4) designed to support at least said removal device (2), said handling means (3) and said extraction means (8), and a cover (9) positioned around said removal device (2) in such a way as to create at least one closed chamber (90) with part of said casing (4) that defines at least one first opening (91) configured to fluidly connect said inlet (80a) section with said closed chamber (90) and a second opening (92) directly facing said machining surface (10a) when said machine (1) is in use.

3. The machine (1) according to at least one of the above claims, wherein said cover (9) comprises a plurality of bristles (93) positioned along the edge of said second opening (92) and designed to come into contact with said machining surface (10a) when said machine (1) is in use in such a way as to brush any residues present on said machining surface (10a) into said closed chamber (90).

4. The machine (1) according to at least one of the above claims, wherein said closed chamber (90) defines a first compartment (90a), within which said removal device (2) is entirely housed when said removal device (2) is at rest, a second compartment (90b), adjacent to said second opening (92) and communicating with said first opening (91), and comprises a partition (94) that is designed to separate said compartments (90a, 90b) and including a through hole (94a) that is essentially of a similar size as said removal device (2) so that, when said removal device (2) is in use, said compartments (90a, 90b) are essentially isolated from each other.

5. The machine (1) according to at least one of the above claims, wherein said cover (9) is removably attached to the casing (4) around said removal device (2) in such a way as to conceal said removal device (2) from the outside.

6. The machine (1) according to at least one of the above claims, comprising a control unit (5) designed to control at least part of said handling means (3) and said removal device (2) and in which said duct (80) defines an expulsion section (80b) and said extraction means (8) include an extraction device (81) operationally connected to said control unit (5), positioned within said duct (80) between said inlet (80a) section and said expulsion (80b) section and designed to exert a suction action such as to convey air and any waste from said inlet (80a) section towards said expulsion section (80b) through said duct (80).

7. The machine (1) according to at least one of the above claims, wherein said extraction device (81) includes one fan.

8. The machine (1) according to at least one of the above claims, wherein said extraction means (8) include a closed housing (82) defining at least one first access (82a) positioned in fluid connection with said duct (80) at said expulsion section (80b), a second access (82b) communicating with the outside and designed to only allow the passage of air through itself, and configured to collect any machining waste coming from said machining surface (10a) inside itself and to expel only air outside.

9. The machine (1) according to at least one of the above claims, wherein said housing (82) includes a filter (83) positioned at said second access (82b) and designed to prevent the release of dust from said housing (82).

10. The machine (1) according to at least one of the above claims, wherein said housing (82) is removably attached to said casing (4) in such a way that it can be hooked or unhooked by said machine (1) and includes a door (84) that can be opened and that is positioned on the bottom of said housing (82) in such a way as to allow the emptying of said housing (82) of any solid waste deposited within said housing (82).

11. The machine (1) according to at least one of the above claims, wherein either said casing (4) or said cover (9) includes safety means (49) configured to block said cover (9) when said removal device (2) reaches a distance with respect to the surface (10a) that is lower than a predetermined distance.

12. The machine (1) according to at least one of the above claims, wherein said cover (9) comprises said safety means (49) and said safety means (49) include interlocking elements protruding from the lateral bulkheads of said cover (9) and extending, starting from the bottom, up to a height limit (h) with respect to said surface (10a), said height limit (h) defining said predetermined distance and said removal device (2) engaging said interlocking safety devices (49) only when said removal device (2) is at a distance with respect to said surface (10a) that is lower than said height limit (h).
